# EUROPEAN PATENT APPLICATION

(11) **EP 1 326 247 A1**
(43) Date of publication of application: **09.07.2003**
(21) Application number: 02256715.0
(22) Date of filing: 26.09.2002
(51) Int. Cl.: G11B 23/38, G11B 19/28, G11B 7/00, G11B 33/10

(54) **Optical disc apparatus**

(30) Priority: 27.12.2001 JP 2001397597; 09.01.2002 JP 2002002248
(71) Applicant: Denon, Ltd., Tokyo 113-0034 (JP)
(72) Inventor: Ito, Hiroshi, Nishishirakawa-gun, Fukushima 961-8031 (JP)
(74) Representative: Hackney, Nigel John

(57) **Abstract**

An optical disc apparatus is designed so that a label face of a CD 1 can be seen from the outside. Then, a light-emitting unit 7 irradiates a light to the label face 1-a of the rotating CD 1 for each period which is longer or shorter than a period that the CD1 rotates once. Therefore, it is possible to check characters, an illustration, or a pattern or the like printed on the label face 1-a of the CD 1 and further, it is possible to visually identify that the CD 1 is rotating.

## Description

The present invention relates to an optical disc apparatus for reproducing the data recorded on an optical disc, for example, a CD player for reproducing the data recorded on a CD (Compact Disc), a DVD player for reproducing the data recorded on a DVD (Digital Versatile Disc) or the like.

A CD player for reproducing the data which is recorded on a CD or a DVD player for reproducing the data which is recorded on a DVD has been widely used. The CD or the DVD has a laser beam incoming face and a label face. On the laser beam incoming face, a laser beam, which is irradiated from an optical pickup provided for the CD player or the DVD player, is emitted to reproduce the data. On the label face, information which is related to the data recorded on the CD or the DVD, such as a disc name of an optical disc, an artist name or the like, an illustration, a pattern and so on are printed.

Conventionally, there has been a CD player in which label face of a CD can be seen from the outside when the CD is placed on a turntable. In such a CD player, while the CD is placed in the CD player, it is possible for a user to check the content recorded on the CD and a kind of the CD from a description printed on the label face. Further, a CD player, where the user can see the label face of the CD from the outside and whose turntable is laid vertical or laid at an angle, has been also known. With this kind of CD player, it is possible to see that the CD is rotating during reproduction of the CD.

Additionally, an optical disc apparatus, in which characters and so on printed on the label face of the optical disc can be visually identified from the outside even when the optical disc is rotating, is disclosed in JP-A-6-342552.

According to the optical disc apparatus disclosed in JP-A-6-342552, a light is emitted to the label face once for each rotation of the optical disc in synchronization with the rotation of the optical disc, so that characters and so on printed on the label face seem static. Alternatively, this optical disc apparatus is capable of changing a light irradiation timing, which decides a position to irradiate the light thereon during one rotation of the optical disc so that characters and so on can seem static at the position clearly visible by the user.

However, according to the optical disc apparatus which is disclosed in JP-A-6-342552, to make characters and so on seem static at a position where it is clearly visible by the user, the light irradiation timing adjusting means (refer to FIG. 2 of JP-A-6-342552) is required, so that a manufacturing cost of the optical disc apparatus becomes high. Also, according to this optical disc apparatus, characters and so on are always visible in a static state, so that, despite that the optical disc has been reproduced, there have been cases that a user misunderstand that the reproduced music is outputted from other device (for example, a tuner) or that the optical disc is broken. Further, according to the optical disc apparatus which is disclosed in JP-A-6-342552, in order for the user to check whether or not the optical disc is rotating, the user has to manually operate the light irradiation timing adjusting means.

Preferably the present invention has been made to solve foregoing problems and an object of which is to provide an optical disc apparatus, whereby a user can recognize characters, an illustration, a pattern or the like printed on a label face of an optical disc, and further, the user can visually identify that the optical disc is rotating not by making characters and so on printed on the label face of the optical disc seem static but by making it seem slowly rotating.

Preferably in order to solve the above described problems, an optical disc apparatus according to the present invention is provided with a rotation unit for fixing and rotating an optical disc having a laser beam incoming face and a label face so that the optical disc apparatus rotates the optical disc by the rotation unit to reproduce the data recorded on the optical disc. The optical disc apparatus according to the present invention is designed so that the label face of the optical disc can be visually identified from the outside. Then, the optical disc apparatus according to the present invention comprises a rotation detecting unit which detects the number of rotations of the rotation unit and generates a clock signal in accordance with the rotation of the rotation unit, a light-emitting unit which irradiates a light to the label face of the optical disc, a counter unit which generates a count signal at each interval which is longer or shorter by a predetermined period than a period that the optical disc fixed to the rotation unit rotates once according to the clock signal generated by the rotation detecting unit and a light-emitting signal generating unit which generates a light-emitting signal for making the light-emitting unit irradiate in synchronization with the count signal generated by the counter unit.

Further, the optical disc apparatus according to the present invention may be provided with a rotation unit for fixing and rotating an optical disc having a laser beam incoming face and a label face so that the optical disc apparatus rotates the optical disc by the rotation unit to reproduce the data recorded on the optical disc. The optical disc apparatus according to the present invention is designed so that the label face of the optical disc can be visually identified from the outside. Then, the optical disc apparatus according to the present invention comprises a rotation detecting unit which detects the number of rotations of the rotation unit and generates a clock signal in accordance with the rotation of the rotation unit, a light-emitting unit which irradiates a light to the label face of the optical disc, an operating unit which accepts input of timing that the light-emitting unit irradiates a light, a counter unit which counts the clock signal generated by the rotation detecting unit and generates a count signal at each designated interval, a control unit which designates the interval at which the counter unit generates the count signal according to timing inputted at the operating unit, and a light-emitting signal generating unit which generates a light-emitting signal for making the light-emitting unit irradiate in synchronization with the count signal generated by the count unit.

### BRIEF DESCRIPTION OF THE DRAWINGS

FIG. 1 is a block diagram for illustrating an optical disc apparatus according to an embodiment of the present invention;
FIG. 2 is a diagram for explaining signal generation timing of a rotation detecting unit 3, a counter unit 4 and a light-emitting signal generating unit 5 shown in FIG. 1; and
FIG. 3 is a diagram for explaining signal generation timing of a rotation detecting unit 3, a counter unit 4 and a light-emitting signal generating unit 5 shown in FIG. 1.

### DESCRIPTION OF THE PREFERRED EMBODIMENTS

A first embodiment according to the present invention is described below.

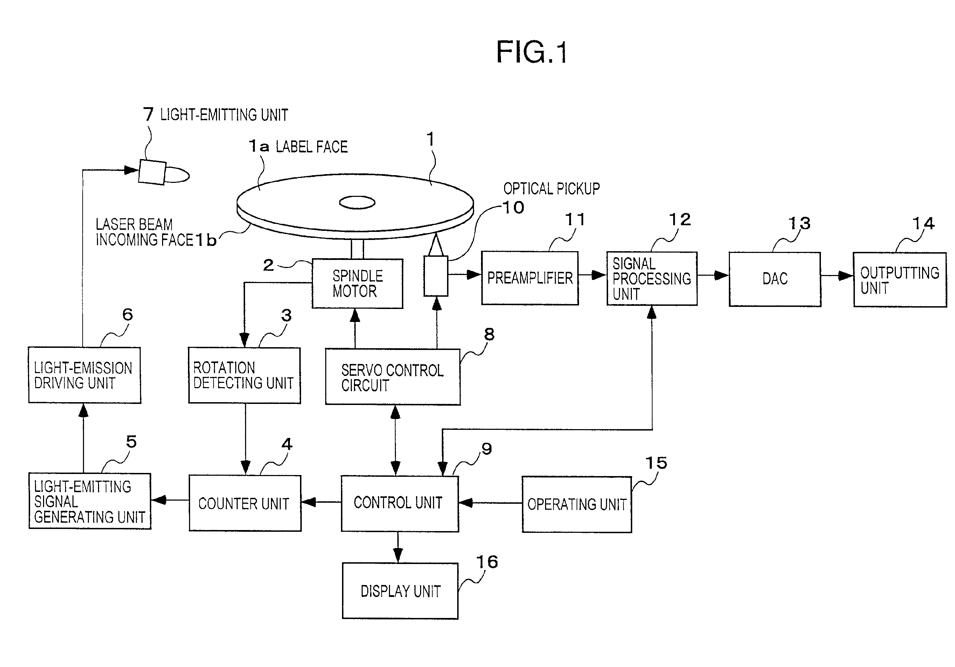

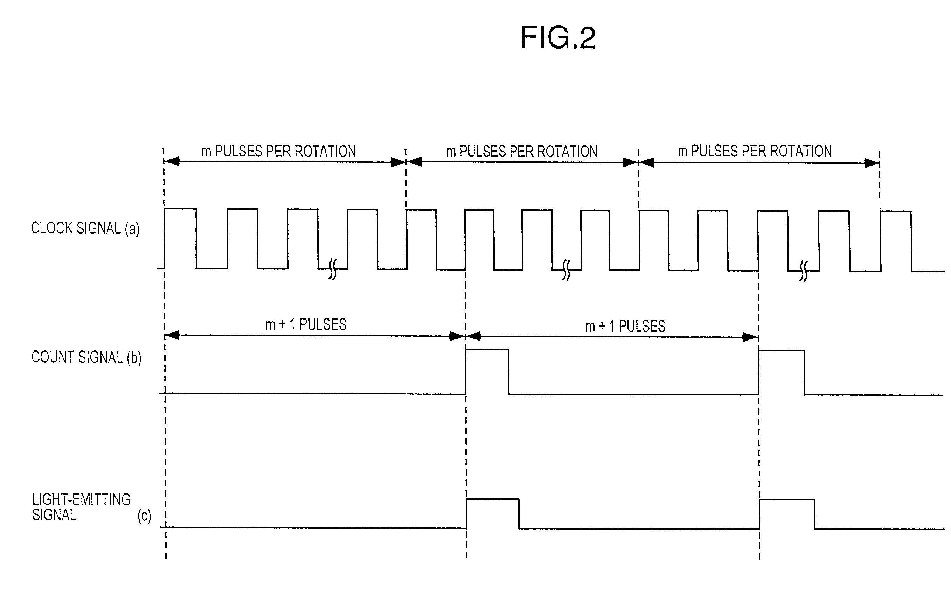

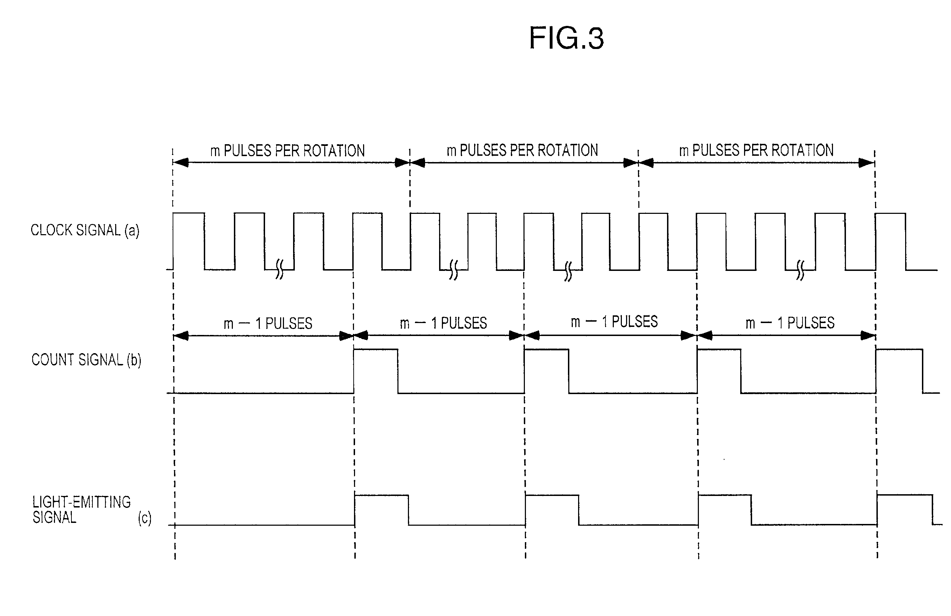

FIG. 1 is a block diagram for illustrating a schematic configuration of an optical disc apparatus to which a first embodiment according to the present invention is applied. FIG. 2 and FIG. 3 are diagrams for explaining signal generation timing of a rotation detecting unit 3, a counter unit 4 and a light-emitting signal generating unit 5 shown in FIG. 1.

The optical disc apparatus according to the present embodiment reproduces data recorded on CD 1 having a label face 1-a and a laser beam incoming face 1-b. As shown in FIG. 1, the optical disc apparatus according to the present embodiment is provided with a spindle motor 2, a rotation detecting unit 3, a counter unit 4, a light-emitting signal generating unit 5, a light-emission driving unit 6, a light-emitting unit 7, a servo control circuit 8, a control unit 9, an optical pickup 10, a preamplifier 11, a signal processing unit 12, a digital to analog converter (DAC) 13, an outputting unit 14, an operating unit 15, and a display unit 16.

When the CD 1 is placed on a turntable that is rotatably driven by the spindle motor 2, and an instruction to start reproduction is provided by a user through the operating unit 15, the optical disc apparatus irradiates the laser beam outputted from the optical pickup 10 to the laser beam incoming face 1-b of the CD 1 so as to reproduce the data recorded on the CD 1. The reproduced data is processed with waveform shaping and is amplified at the preamplifier 11. The signal processing unit 12 performs demodulation processing and extraction processing of an error signal and a synchronization signal with respect to the data outputted from the preamplifier 11. The DAC 13 converts a digital signal processed by the signal processing unit 12 into an analog signal. The outputting unit 14 comprises a speaker or the like and outputs the analog signal outputted from the DAC 13 as a sound. The display unit 16 displays a track number and/or a reproduction time of data being reproduced at the present time on the basis of the sub code data which is demodulated at the signal processing unit 12.

The spindle motor 2 is provided with a rotation detecting pieces for detecting a number of rotations. The rotation detecting unit 3 detects the rotation detecting pieces of the rotating spindle motor 2, generates a clock signal in accordance with the rotating state of the spindle motor 2 and inputs the clock signal in the counter unit 4. As shown in a clock signal (a) in FIG. 2 and FIG. 3, the rotation detecting unit 3 generates a clock signal consisted of m pulses per rotation of the spindle motor 2.

The counter unit 4 generates a count signal at each interval which is longer or shorter by a predetermined period (for example, a period for m ± 1 pulses of the clock signal) than a period during the spindle motor 2 rotates once (i.e., a period for m pulses of the clock signal) according to the clock signal inputted from the rotation detecting unit 3 so as to input this count signal in the light-emitting signal generating unit 5. As shown in a count signal (b) in FIG. 2, the counter unit 4 generates a count signal for each period corresponding to m+1 pulses. Alternatively, as shown in a count signal (b) in FIG. 3, the counter unit 4 generates a count signal at each interval corresponding to m-1 pulses.

The light-emitting signal generating unit 5 generates a light-emitting signal in synchronization with the count signal inputted from the counter unit 4 to input this signal in the light-emission driving unit 6. As shown in a light-emitting signal (c) in FIG. 2 and FIG. 3, the light-emitting signal generating unit 5 generates a light-emitting signal in synchronization with the count signal.

The light-emission driving unit 6 drives the light-emitting unit 7, which is an electric bulb or a light emitting diode and the like, according to the light-emitting signal inputted from the light-emitting signal generating unit 5. The light-emitting unit 7 irradiates a light to the label face 1-a of the CD 1 every time the light-emitting signal is inputted.

According to the optical disc apparatus as described above, a light is irradiated to the label face 1-a of the CD 1 at each interval which is longer or shorter by a predetermined period than a period during the CD rotates once, so that the label face 1-a of the CD 1 seems to rotate slowly rather than remain static. In other words, in the case that the timing for irradiating a light to the CD 1 is longer than a period of one rotation of the CD 1, the CD 1 seems rotating clockwise and in the case that timing for irradiating a light to the CD 1 is shorter than a period of one rotation of the CD 1, the CD 1 seems rotating counterclockwise. Therefore, it is possible to see an illustration, a pattern or the like printed on the label face 1-a of the CD 1 as rotating at a slow speed. Accordingly, even when the illustration, the pattern or the like of the label face 1-a of the CD 1 are upside down viewing from the user at first, the label face 1-a of the CD 1 rotates slowly so that it rotatably moves to a position where the user can easily see it. Then, the CD 1 further rotates so that the illustration, the pattern or the like of the label face 1-a of the CD 1 gradually rotates to a direction that is again upside down viewing from the user. The label face 1-a of the CD 1 rotates in this way. Therefore, the user can recognize the illustration or the like that is printed on the label face 1-a of the CD 1 without adjusting timing of the irradiation of the light. Also, the user can visually identify the rotation of the CD 1.

Next, a second embodiment according to the present invention will be described below.

A schematic configuration of an optical disc apparatus to which the present embodiment is applied is the same as that of the first embodiment shown in FIG. 1. However, according to the present embodiment, the optical disc apparatus is designed so that the user can adjust timing of generation of a count signal. Therefore, the counter unit 4 generates a count signal at each interval designated by the aforementioned operating unit 15 and inputs the count signal in the light-emitting signal generating unit 5. The operating unit 15 is provided with an input unit for designating an interval that the counter unit 4 generates a count signal. For example, as the input unit, the operating unit 15 has a plus button for making an interval that the counter unit 4 generates a count signal longer than a period of one rotation of the spindle motor 2 for each pulse and a minus button for making this period shorter than a period of one rotation of the spindle motor 2 for each pulse. Also, the display unit 16 displays a reference "0" when the light is emitted once in synchronization with one rotation of the spindle motor 2, displays "+1" if the plus button is pushed once in the case of the reference "0" and displays "-1" if the minus button is pushed once in the case of the reference "0". Then, if the minus button is pushed once when the display unit 16 displays "+1", the display unit 16 displays the reference "0", and if the plus button is pushed once when the display unit 16 displays "-1", the display unit 16 displays the reference "0". Further, the control unit 9 controls the counter unit 4 so that it generates a count signal at each interval designated by the user through the operating unit 15.

Therefore, in addition to the effect according to the first embodiment of the present invention, it is possible for the user to see that the label face 1-a of the CD 1 is slowly rotating in a desirable direction at a desirable speed.

Here, according to the above-described first and second embodiments, an optical disc apparatus for reproducing a CD is explained as an example. However, the present invention can be widely applied to an optical disc reproducing device for reproducing an optical disc (for example, a DVD) having a label face.

As described above, according to the present invention, characters and so on printed on the label face of the optical disc seem to rotate slowly rather than remain static. Therefore, the user is capable of recognizing characters, an illustration, a pattern or the like printed on the label face of the optical disc and simultaneously, the user can visually identify that the optical disc is rotating.

## Claims

1. An optical disc apparatus provided with a rotation unit for fixing and rotating an optical disc having a laser beam incoming face and a label face, the optical disc apparatus reproducing data recorded on said optical disc that are rotated by said rotation unit, and having a configuration where a label face of said optical disc can be visually identified from the outside, comprising:
a rotation detecting unit which detects the number of rotations of said rotation unit and generates a clock signal in accordance with the rotation of said rotation unit;
a light-emitting unit which irradiates a light to said label face of said optical disc;
a counter unit which generates a count signal at each interval which is longer or shorter by a predetermined period than a period that said optical disc fixed to said rotation unit rotates once according to said clock signal generated by said rotation detecting unit; and
a light-emitting signal generating unit which generates a light-emitting signal for making said light-emitting unit irradiate in synchronization with said count signal generated by said counter unit.

2. An optical disc apparatus provided with a rotation unit for fixing and rotating an optical disc having a laser beam incoming face and a label face, the optical disc apparatus reproducing data recorded on said optical disc that are rotated by said rotation unit, and having a configuration where a label face of said optical disc can be visually identified from the outside, comprising:
a rotation detecting unit which detects a number of rotations of said rotation unit and generates a clock signal in accordance with the rotation of said rotation unit;
a light-emitting unit which irradiates a light to said label face of said optical disc;
an operating unit which accepts timing input that said light-emitting unit irradiates a light;
a counter unit which counts said clock signal generated by said rotation detecting unit and generates a count signal at each an interval to be designated;
a control unit which designates said interval at which said counter unit generates said count signal according to timing inputted in said operating unit; and
a light-emitting signal generating unit which generates a light-emitting signal for making said light-emitting unit irradiate in synchronization with the count signal generated by said count unit.
